# EUROPÄISCHE PATENTSCHRIFT

(11) **EP 1 069 166 B1**
(45) Veröffentlichungstag und Bekanntmachung des Hinweises auf die Patenterteilung: **07.05.2003**
(21) Anmeldenummer: 00115116.6
(22) Anmeldetag: 12.07.2000
(51) Int. Cl.: C09D 13/00

(54) **Farbmine oder Farbkreide**
Coloured lead or coloured chalk
Mine de couleur ou craie de couleur

(30) Priorität: 14.07.1999 DE 19932823
(43) Veröffentlichungstag der Anmeldung: 17.01.2001
(73) Patentinhaber: Faber- Castell AG, 90546 Stein (DE)
(72) Erfinder: Appel, Reiner, 90522 Oberasbach (DE); Lugert, Gerhard Dr., 90431 Nürnberg (DE); Von Godin, Harald, 90522 Oberasbach (DE)
(74) Vertreter: Mörtel, Alfred, Dr. Dipl.-Phys.

(56) Entgegenhaltungen:
- US-A- 4 212 786
- US-A- 5 813 216
- PATENT ABSTRACTS OF JAPAN vol. 008, no. 052 (C-213), 9. März 1984 (1984-03-09) & JP 58 208360 A (PENTEL KK), 5. Dezember 1983 (1983-12-05)
- PATENT ABSTRACTS OF JAPAN vol. 1996, no. 05, 31. Mai 1996 (1996-05-31) & JP 08 003504 A (MITSUBISHI PENCIL CO LTD), 9. Januar 1996 (1996-01-09)
- PATENT ABSTRACTS OF JAPAN vol. 012, no. 279 (C-517), 1. August 1988 (1988-08-01) & JP 63 057682 A (PENTEL KK), 12. März 1988 (1988-03-12)

## Beschreibung

Die Erfindung betrifft eine Farbmine oder Farbkreide, die ein Gleitmittel, einen Füllstoff, ein Bindemittel und ein Farbmittel bzw. jeweils mehrere der genannten Stoffe enthält. Aus Vereinfachungsgründen wird im Folgenden nur von Farbminen gesprochen. Als Bindemittel werden bei solchen Farbminen vielfach Zellulosederivate verwendet. Zur Herstellung der Minen werden die genannten Bestandteile zunächst in einem ersten Verfahrensschritt unter Zugabe von Wasser in einem Kneter oder einem Schnellmischer miteinander vermischt. Das zum Quellen des Zellulosederivats erforderliche Wasser muss später wieder durch Trocknen entfernt werden, was einen zusätzlichen Bearbeitungsschritt und einen Energieaufwand bedeutet. Zur Herstellung wasserfester, also nicht aquarellierbarer Minen kann so vorgegangen werden, dass die Wasserfestigkeit der Mine nachträglich hergestellt wird, indem die Mine nach ihrer Trocknung in flüssiges Wachs getaucht wird. Eine Wasserlöslichkeit bzw. eine Aquarellierbarkeit kann dagegen durch nachträgliches Tauchen der Minen in geschmolzene Emulgatoren erreicht werden. Die Herstellung von Farbminen mit einem Zellulosederivat als Bindemittel erfordert somit zumindest drei Verfahrensschritte, nämlich das anfängliche Mischen, die Minenextrusion und den abschließenden Trocknungsschritt. In DE sind 196 53 926 A1 sind Minen der eingangs genannten Art beschrieben, bei denen Polyvinylalkohol als Bindemittel verwendet wird. Mit diesem Bindemittel lassen sich aber nur aquarellierbare Minen und Kreiden herstellen.

Aufgabe der Erfindung ist es, eine Farbmine vorzuschlagen, die sich auf einfache Weise in wasserfester oder aquarellierbarer Ausführung herstellen lässt.

Diese Aufgabe wird dadurch gelöst, dass die Minenmasse als Bindemittel Polyvinylbutyral (im Folgenden kurz PVB) und als Gleitmittel ein Fettsäuresalz enthält. Es hat sich gezeigt, dass PVB sich sowohl mit aquarellierbaren als auch mit nicht aquarellierbaren Gleitmitteln verarbeiten und insbesondere vermischen lässt. PVB kann daher gleichermassen für aquarallierbare als auch für nicht aquarellierbare Farbminen verwendet werden. Besondere Verfahrens- oder Zusammensetzungsvarianten sind dabei nicht zu beachten. Besonders vorteilhaft ist es, dass der Ausgangsminenmasse kein Wasser zugesetzt werden muss, das später wieder durch einen arbeits- und energieaufwendigen Trockenschritt wieder entfernt werden muss. Vorteilhaft ist weiterhin, daß praktisch allein durch entsprechende Auswahl des Gleitmittels die Mine aquarellierbar oder nicht aquarellierbar einstellbar ist. Vorteilhaft ist schließlich noch, dass das Herstellungsverfahren für beide Minenarten praktisch identisch ist und nur zwei Schritte umfasst. In einem ersten Schritt werden die Minenbestandteile also PVB, das Fettsäuresalz, der Füllstoff und ein Farbmittel ohne Zusatz von Wasser miteinander - etwa in einem Schnellmischer - bei einer Temperatur beispielsweise von 140°C vermischt und anschließend in einem zweiten Arbeitsschritt zu Minen extrudiert. Ein Trocknen der Minen und ein Eintauchen in geschmolzenes Wachs oder eine Tränkung mit einem Emulgator sind dagegen nicht erforderlich.

Vorzugsweise werden als Gleitmittel Fettsäuresalze aus der Gruppe Lithium-, Natrium-, Kalium-, Calcium-, Zink- und Magnesiumstearat verwendet. Die Kombination dieser Fettsäuresalze mit PVB hat sich als besonders vorteilhaft erwiesen. Es werden damit Minen mit einem gleichmäßigen Abstrich und einer auch für dünne Minen geeigneten mechanischen Stabilität erhalten. Als weiteres in dem genannten Sinne sehr vorteilhaftes Gleitmittel hat sich Magnesiummyristat herausgestellt. Darüberhinaus kann auch Graphit als Gleitmittel eingesetzt werden. Die erwähnten guten Ergebnisse werden erhalten, wenn der Gehalt an PVB zwischen 1 und 20 Gew.% und der Gehalt des Fettsäuresalzes zwischen 5 und 35 Gew.% liegt.

Besonders gute Ergebnisse hinsichtlich der Festigkeit und der Konsistenz der Mine werden erhalten, wenn der Minenmasse ein primäres oder sekundäres Fettsäureamid oder ein sekundäres Fettsäurediamid zugesetzt werden. Die genannten Amide wirken ähnlich wie Gleitmittel und wirken sich günstig auf die Verarbeitung der Minenmasse, beispielsweise in Schneckenextrudern, aus und ergeben sehr glatte homogene Minen. Besonders geeignet sind Ethylendistearinsäureamid und Stearinsäuremonoethanolamid. Bei einer bevorzugten Minenmasse sind 1 bis 5 Gew.% wenigstens eines der genannten Amide neben 5 bis 35 Gew.% Fettsäuresalz und 1 bis 20 Gew.% PVB enthalten. Neben den erwähnten Amiden können zur Verbesserung der Minenqualität, insbesondere zur Verbesserung des Abstrichverhaltens und zur Steigerung der mechanischen Stabilität Additive aus der Gruppe oxidiertes Ethylen, Ethylenvinylacetat-Copolymer, Triglycerid, Fettsäure, Fettsäurederivat, hydriertes Castoröl, Wachs, z.B. Wollwachs und Paraffine, Acrylsäurepolymer, Maleinsäure, modifiziertes Kolophoniumharz enthalten sein. Als Farbmittel werden insbesondere organische und anorganische Pigmente eingesetzt. Als Füllstoffe für wasserfeste und aquarellierbare Minen werden vor allem Kaolin, Calciumcarbonat, Bimsmehl, Glimmer und Talkum eingesetzt.

| **Beispiel 1**: | |
|---|---|
| Polyvinylbutyral (Mw 97.000 g/mol) | 9,0 % |
| Calciumstearat | 20,0 % |
| Dispergierhilfsmittel (Surfynol 104 S) | 1,0 % |
| Kaolin | 64,0 % |
| Pigment Red 112 (C.I. 12370) | 4,0 % |
| Stearinsäuremonoethanolamid | 2,0 % |

Mit dieser Minenmasse wurden rote, wasserfeste Minen mit einem Durchmesser von 2,8 mm hergestellt. Die Prozentangaben in diesem und den folgenden Rezepturbeispielen sind Gewichtsprozent. Das Dispergierhilfsmittel Surfynol 104 S wird von der Firma Air Products, NL 3502 Utrecht vertrieben.

| **Beispiel 2:** | |
|---|---|
| Polyvinylbutyral (Mw 43.000 g/mol) | 3,0 % |
| Magnesiummyristat | 12,0% |
| Talkum | 20,0 % |
| Calciumcarbonat | 57,5 % |
| Pigment Green 7 (C.I. 74260) | 1,5 % |
| Paraffinwachs | 4,0 % |
| Bienenwachs | 2,0 % |

Mit einer solchen Minenmasse wurden grüne, wasserfeste Kreiden mit einem Druchmesser von 12 mm hergestellt.

| **Beispiel 3 :** | |
|---|---|
| Polyvinylburyral (Mw 110.000 g/mol) | 7,0 % |
| Kaolin | 65,0 % |
| Dispergierhilfsmittel (Surfynol S 104 S) | 1,0 % |
| Pigment Black 7 (C.I. 77266) | 5,0 % |
| Natriumstearat | 19,0 % |
| sekundäres Fettsäurediamid (CRODAMIDE EBS) | 3,0 % |

Mit dieser Minenmasse wurden schwarze, aquarellierbare Minen mit einem Durchmesser von 3,3 mm hergestellt. Crodamide EBS ist ein Produkt der Croda GmbH, DE 41334 Nettetal.

| **Beispiel 4:** | |
|---|---|
| Polyvinylbutyral (Mw 57.000 g/mol) | 2,0 % |
| Polyethylenglykol | 6,0 % |
| Lithiumstearat | 10,0 % |
| Pigment Yellow 1 (C.I. 11680) | 2,0 % |
| Dispergierhilfsmittel (Surfynol S 104 S) | 1,0 % |
| Bimsmehl | 79,0 % |

Mit einer solchen Minenmasse wurden gelbe, aquarellierbare Kreiden mit einem Durchmesser von 10 mm hergestellt.

Die in den Beispielen 1 bis 4 genannten Minenmassen werden beispielsweise wie folgt verarbeitet:

In einem ersten Arbeitsschritt werden die Rezepturbestandteile etwa in einem Schnellmischer homogenisiert und compoundiert. In einem zweiten Arbeitsschritt werden Minen oder Kreiden extrudiert. Beide Arbeitsschritte können auch zusammengefasst werden, wenn ein Mischextruder oder ein Extruder mit Knetelementen verwendet wird. Bei der Verarbeitung der Minenmasse wird je nach der Molmasse des eingesetzten Butyrals eine Temperatur zwischen 100 und 190°C, vorzugsweise zwischen 100 und 150°C eingehalten. Im Gegensatz zur Verarbeitung von Minen mit thermoplastischen Bindemitteln, wie PS, PP und PE ist also eine schonendere Verarbeitung möglich, so dass auch Rohmaterialien mit einer geringen Temperaturstabilität einsetzbar sind.

## Patentansprüche

1. Farbmine oder Farbkreide mit einer ein Gleitmittel, einen Füllstoff, ein Bindemittel und ein Farbmittel enthaltenden Minenmasse,
**dadurch gekennzeichnet,**
**dass** als Bindemittel 1 bis 20 Gew.% Polyvinylbutyral und als Gleitmittel ein Fettsäuresalz enthalten sind.

2. Farbmine oder Farbkreide nach Anspruch 1,
**gekennzeichnet durch**
wenigstens ein Fettsäuresalz aus der Gruppe Lithium-, Natrium-, Kalium-, Calcium-, Zink- und Magnesiumstearat.

3. Farbmine oder Farbkreide nach Anspruch 2,
**dadurch gekennzeichnet, dass** das Fettsäuresalz Magnesiummyristat ist.

4. Farbmine oder Farbkreide nach einem der Ansprüche 1 bis 3,
**dadurch gekennzeichnet,**
**dass** sie 5 bis 35 Gew.% Fettsäuresalz enthält.

5. Farbmine oder Farbkreide nach einem der Ansprüche 1 bis 4,
**dadurch gekennzeichnet,**
**dass** sie wenigstens ein Additiv aus der Gruppe primäre Fettsäureamide, sekundäre Fettsäureamide und sekundäre Fettsäurediamide enthält.

6. Farbmine oder Farbkreide nach Anspruch 5,
**dadurch gekennzeichnet,**
**dass** sie Ethylendistearinsäureamid enthält.

7. Farbmine oder Farbkreide nach Anspruch 5,
**dadurch gekennzeichnet,**
**dass** sie Stearinsäuremonoethanolamid enthält.

8. Farbmine oder Farbkreide nach Anspruch 1,
**gekennzeichnet durch**:
| folgende Rezeptur (Gew.%): | |
|---|---|
| Polyvinylbutyral (Mw 97.000 g/mol) | 9,0 % |
| Calciumstearat | 20,0 % |
| Dispergierhilfsmittel (Surfynol 104 S) | 1,0 % |
| Kaolin | 64,0 % |
| Pigment Red 112 (C.I. 12370) | 4,0 % |
| Stearinsäuremonoethanolamid | 2,0 % |

9. Farbmine oder Farbkreide nach Anspruch 1,
**gekennzeichnet durch**
| folgende Rezeptur (Gew.%): | |
|---|---|
| Polyvinylbutyral (Mw 43.000 g/mol) | 3,0 % |
| Magnesiummyristat | 12,0 % |
| Talkum | 20,0 % |
| Calciumcarbonat | 57,5 % |
| Pigment Green 7 (C.I. 74260) | 1,5 % |
| Paraffinwachs | 4,0 % |
| Bienenwachs | 2,0 % |

10. Farbmine oder Farbkreide nach Anspruch 1,
**gekennzeichnet durch**
| folgende Rezeptur (Gew.%): | |
|---|---|
| Polyvinylbutyral (Mw 110.000 g/mol) | 7,0 % |
| Kaolin | 65,0 % |
| Dispergierhilfsmittel (Surfynol S 104 S) | 1,0 % |
| Pigment Black 7 (C.I. 77266) | 5,0 % |
| Natriumstearat | 19,0 % |
| sekundäres Fettsäurediamid | |
| (CRODAMIDE EBS) | 3,0 % |

11. Farbmine oer Farbkreide nach Anspruch 1,
**gekennzeichnet durch**
| folgende Rezeptur (Gew.%): | |
|---|---|
| Polyvinylbutyral (Mw 57.000 g/mol) | 2,0 % |
| Polyethylenglykol | 6,0 % |
| Lithiumstearat | 10,0 % |
| Pigment Yellow 1 (C.I. 11680) | 2,0 % |
| Dispergierhilfsmittel (Surfynol S 104 S) | 1,0 % |
| Bimsmehl | 79,0 % |

## Claims

1. Coloured lead or coloured chalk with a lead mass comprising a lubricant, a filler, a binder and a colorant,
**characterized in that**
the binder present is 1 to 20% by weight of polyvinylbutyral and the lubricant present is a fatty acid salt.

2. Coloured lead or coloured chalk according to Claim 1,
**characterized by**
at least one fatty acid salt from the group lithium stearate, sodium stearate, potassium stearate, calcium stearate, zinc stearate and magnesium stearate.

3. Coloured lead or coloured chalk according to Claim 2,
**characterized in that**
the fatty acid salt is magnesium myristate.

4. Coloured lead or coloured chalk according to one of Claims 1 to 3,
**characterized in that**
it comprises 5 to 35% by weight of fatty acid salt.

5. Coloured lead or coloured chalk according to one of Claims 1 to 4,
**characterized in that**
it comprises at least one additive from the group of primary fatty acid amides, secondary fatty acid amides and secondary fatty acid diamides.

6. Coloured lead or coloured chalk according to Claim 5,
**characterized in that**
it comprises ethylene distearamide.

7. Coloured lead or coloured chalk according to Claim 5,
**characterized in that**
it comprises stearic acid monoethanolamide.

8. Coloured lead or coloured chalk according to Claim 1,
**characterized by**
| the following formulation (% by wt.): | |
|---|---|
| polyvinylbutyral (Mw 97 000 g/mol) | 9.0% |
| calcium stearate | 20.0% |
| dispersion auxiliary (Surfynol 104 S) | 1.0% |
| kaolin | 64.0% |
| pigment Red 112 (C.I. 12370) | 4.0% |
| stearic acid monoethanolamide | 2.0% |

9. Coloured lead or coloured chalk according to Claim 1,
**characterized by**
| the following formulation (% by wt.): | |
|---|---|
| polyvinylbutyral (Mw 43 000 g/mol) | 3.0% |
| magnesium myristate | 12.0% |
| talc | 20.0% |
| calcium carbonate | 57.5% |
| pigment Green 7 (C.I. 74260) | 1.5% |
| paraffin wax | 4.0% |
| beeswax | 2.0% |

10. Coloured lead or coloured chalk according to Claim 1,
**characterized by**
| the following formulation (% by wt.): | |
|---|---|
| polyvinylbutyral (Mw 110 000 g/mol) | 7.0% |
| kaolin | 65.0% |
| dispersion auxiliary (Surfynol S 104 S) | 1.0% |
| pigment Black 7 (C.I. 77266) | 5.0% |
| sodium stearate | 19.0% |
| secondary fatty acid diamide | |
| (CRODAMIDE EBS) | 3.0% |

11. Coloured lead or coloured chalk according to Claim 1,
**characterized by**
| the following formulation (% by wt.): | |
|---|---|
| polyvinylbutyral (Mw 57 000 g/mol) | 2.0% |
| polyethylene glycol | 6.0% |
| lithium stearate | 10.0% |
| pigment Yellow 1 (C.I. 11680) | 2.0% |
| dispersion auxiliary (Surfynol S 104 S) | 1.0% |
| pumice flour | 79.0% |

## Revendications

1. Mine de couleur ou craie de couleur, ayant une composition de mine comprenant un agent lubrifiant, une charge, un agent liant et un colorant,
**caractérisée en ce qu'**il est contenu comme agent liant de 1 à 20 % en poids de polyvinylbutyral et comme agent lubrifiant un sel d'acide gras.

2. Mine de couleur ou craie de couleur suivant la revendication 1,
**caractérisée par** au moins un sel d'acide gras, choisi dans le groupe du stéarate de lithium, du stéarate de sodium, du stéarate de potassium, du stéarate de calcium, du stéarate de zinc et du stéarate de magnésium.

3. Mine de couleur ou craie de couleur suivant la revendication 2,
**caractérisée en ce que** le sel d'acide gras est une myristate de magnésium.

4. Mine de couleur ou craie de couleur suivant l'une des revendications 1 à 3,
**caractérisée en ce qu'**elle contient de 5 à 35 % en poids dU sel d'acide gras.

5. Mine de couleur ou craie de couleur suivant l'une des revendications 1 à 4,
**caractérisée en ce qu'**elle contient au moins un additif choisi dans le groupe des amides primaires d'acide gras, des amides secondaires d'acide gras et des diamides secondaires d'acide gras.

6. Mine de couleur ou craie de couleur suivant la revendication 5,
**caractérisée en ce qu'**elle contient de l'amide de l'acide éthylènedistéarique.

7. Mine de couleur ou craie de couleur suivant la revendication 5,
**caractérisée en ce qu'**elle contient du monoéthanolamide de l'acide stéarique.

8. Mine de couleur ou craie de couleur suivant la revendication 1,
| **caractérisée par** la composition suivante (en % en poids) : | |
|---|---|
| polyvinylbutyral (masse moléculaire 97 000 g/mol) | 9,0 % |
| stéarate de calcium | 20,0 % |
| adjuvant de dispersion (Surfynol 104 S) | 1,0 % |
| kaolin | 64,0 % |
| pigment rouge 112 (C.I. 12370) | 4,0 % |
| Monoéthanolamide de l'acide stéarique | 2,0 % |

9. Mine de couleur ou craie de couleur suivant la revendication 1,
| **caractérisée par** la composition suivante (en % en poids) : | |
|---|---|
| polyvinylbutyral (masse moléculaire 43 000 g/mol) | 3,0 % |
| myristate de magnésium | 2,0 % |
| talc | 20,0 % |
| carbonate de calcium | 57,5 % |
| pigment vert 7 (C.I. 74260) | 1,5 % |
| cire de paraffine | 4,0 % |
| cire d'abeille | 2,0 % |

10. Mine de couleur ou craie de couleur suivant la revendication 1,
| **caractérisée par** la composition suivante (en % en poids) : | |
|---|---|
| polyvinylbutyral (masse moléculaire 110 000 g/mol) | 7,0 % |
| kaolin | 65,0 % |
| adjuvant de dispersion (Surfynol S 104 S) | 1,0 % |
| pigment noir 7 (C.I. 77266) | 5,0 % |
| stéarate de sodium | 19,0% |
| diamide secondaire d'acide gras | 3,0 % |
| (CRODAMIDE EBS) | |

11. Mine de couleur ou craie de couleur suivant la revendication 1,
| **caractérisée par** la composition suivante (en % en poids) : | |
|---|---|
| polyvinylbutyral (masse moléculaire 57 000 g/mol) | 2,0 % |
| polyéthylèneglycol | 6,0 % |
| stéarate de lithium | 10,0 % |
| pigment jaune 1 (C.I. 11680) | 2,0 % |
| adjuvant de dispersion (Surfynol S 104 S) | 1,0 % |
| poudre de pierre ponce | 79,0 % |
